Europäisches Patentamt

European Patent Office

Office européen des brevets

(11) Numéro de publication: **0 152 720**
**A1**

(12) # DEMANDE DE BREVET EUROPEEN

(21) Numéro de dépôt: **84810090.5**

(22) Date de dépôt: **22.02.84**

(51) Int. Cl.⁴: **H 02 G 1/08**

(43) Date de publication de la demande: **28.08.85**
**Bulletin 85/35**

(84) Etats contractants désignés: **CH DE FR GB IT LI**

(71) Demandeur: **Plumettaz S.A., Route de Massongex, CH-1880 Bex (Canton de Vaud) (CH)**

(72) Inventeur: **Plumettaz, Denis, Ch. J.-Gallet, CH-1880 Bex (CH)**

(74) Mandataire: **Rochat, Daniel Jean et al, Bovard AG Patentanwälte VSP Optingenstrasse 16, CH-3000 Bern 25 (CH)**

(54) **Dispositif de commande d'un transporteur intermédiaire.**

(57) Le transporteur (15) logé dans la chambre (2) tire un tronçon du câble (8) qui s'étend jusqu'à une autre chambre (2) située en amont. A l'aval du transporteur (15) dans la zone de détection délimitée par la paire de galets (28, 29) le câble est disposé de façon à former un tronçon à tension nulle. Dès que le tronçon du câble (8) situé à l'aval des galets (28, 29) est tiré, le détecteur de rotation (30) émet des impulsions qui sont comptées dans le compteur (31). Le circuit (33) élabore un signal d'entraînement au poste moteur (18). La vitesse d'entraînement du câble (8) par les bandes (20, 21) est détectée par le détecteur (26) et réglée à une vitesse telle qu'en moyenne les longueurs de câble détectées par les détecteurs (30 et 26) soient égales.

Dispositif de commande d'un transporteur intermédiaire

La présente invention a pour objet un dispositif de commande d'un transporteur intermédiaire dans une installation de pose d'un élément allongé. Les problèmes qui sont liés à la mise en place de tels éléments, comme par exemple des câbles de téléphone, sont connus et le fascicule de demande de brevet allemand DE 30 19 667 par exemple expose certaines des difficultés que l'on rencontre à l'heure actuelle lorsqu'il s'agit de mettre en place dans une tranchée ou dans un tube enterré un câble qui est formé de différents tronçons de grandes longueurs. Ainsi, lorsqu'il s'agit de câbles de transmission à fibres optiques, ces derniers sont produits en tronçons pouvant mesurer jusqu'à 5 km de longueur et il est souvent nécessaire de les tirer à travers une installation de pose qui comporte à son extrémité amont un dévidoir et à son extrémité aval un treuil de traction, ces deux organes étant espacés de la distance indiquée précédemment. L'opération de pose commence par la mise en place d'un câble ou d'un filin de traction que l'on déroule à partir de l'extrémité aval de l'installation, et que l'on raccorde à l'extrémité aval du câble proprement dit, alors que celle-ci se trouve sur le dévidoir. Pour éviter des sollicitations exagérées sur le câble, on place de distance en distance des transporteurs intermédiaires. Ces machines qui doivent être de construction aussi ramassée que possible, sont en général placées dans la fouille destinée à recevoir le câble ou dans des chambres ménagées de distance en distance dans le sol à des emplacements où le tube de réception du câble est interrompu.

Dans des installations de ce genre, il est nécessaire de synchroniser le fonctionnement des différents transporteurs afin que chacun d'eux tire efficacement le tronçon de câble qui lui est attribué et que de cette manière, les efforts exercés par chaque transporteur soient optimalisés.

On connaît déjà par la publication mentionnée plus haut un dispositif de commande d'un transporteur intermédiaire qui est destiné à fonctionner de façon auto-réglée, de sorte qu'il n'est pas nécessaire que les différents transporteurs soient connectés entre eux et reliés à un poste central de contrôle et de commande des différents transporteurs. Ce dispositif de commande utilise un transporteur constitué d'une poulie motrice que le câble entoure sur un arc d'env. 180$^{\circ}$ et deux poulies de guidage adjacentes à la poulie motrice. L'agencement est tel que le frottement nécessaire pour transmettre le couple de traction de la poulie motrice au câble n'est réalisé que si le câble se trouve sous tension à l'aval du transporteur.

Toutefois, la pratique a révélé que des dispositifs de ce genre ont un encombrement trop considérable dans le cas où le câble est d'un type qui ne supporte pas des rayons de courbure relativement réduits. Avec des câbles qui ne peuvent supporter que des rayons de courbures relativement grands, comme en particulier les câbles constitués de fibres optiques, il est nécessaire d'utiliser aussi bien comme poulie motrice que comme poulie de guidage des pièces ayant un grand diamètre, ce qui conduit à des transporteurs de dimensions exagérées étant donné le faible encombrement des chambres intermédiaires que l'on prévoit de distance en distance dans les chantiers de pose de tubes enterrés ou dans les chantiers de réalisation des tranchées pour la mise en place des câbles enterrés.

En outre, on a constaté que les dispositifs connus du genre rappelé plus haut qui fonctionnent par auto-régulation ou par tout ou rien, en ce sens que la poulie motrice est constamment entraînée en rotation et que le câble est entraîné ou n'est pas entraîné suivant l'effort de traction qu'il subit à l'aval, n'offraient pas de possibilité de réglage suffisamment fine et pouvaient provoquer au cours de la pose, mais surtout au démarrage, des efforts brusques sur certains tronçons de câble, dûs à des à coups.

Ainsi, le but de la présente invention est de remédier aux défauts des installations de pose de câbles de transmission déjà connues en créant un dispositif de commande grâce auquel la vitesse d'entraînement de chaque transporteur est réglée en permanence par un dispositif de commande qui perçoit sur place une donnée dont il est possible de déduire si le transporteur doit être accéléré ou ralenti afin d'assurer une transmission optimale des efforts.

Selon l'invention, le dispositif de commande est caractérisé en ce que le transporteur est d'un type à vitesse d'entraînement variable et en ce que le dispositif comporte des moyens de guidage du câble disposés à l'aval du transporteur dans un emplacement adjacent à ce dernier, ces moyens délimitant une zone de détection que le câble parcourt sous l'action de moyens de traction situés à l'aval de cette zone, des moyens de détection capables de produire une information relative à la longueur du segment de câble situé dans une zone de détection et des moyens de commande capables d'utiliser la dite information et de régler la dite vitesse d'entraînement du transporteur à une valeur telle que la longueur du dit segment est suffisante pour assurer un état de tension nulle.

Les moyens de détection peuvent être de différents types, mais on décrira principalement ci-après deux formes d'exécution particulièrement simples et aptes à atteindre le but visé.

Les formes d'exécution données à titre d'exemple sont représentées au dessin, dans lequel

la fig. 1 est une vue en coupe schématique de transmission sous tube enterré,

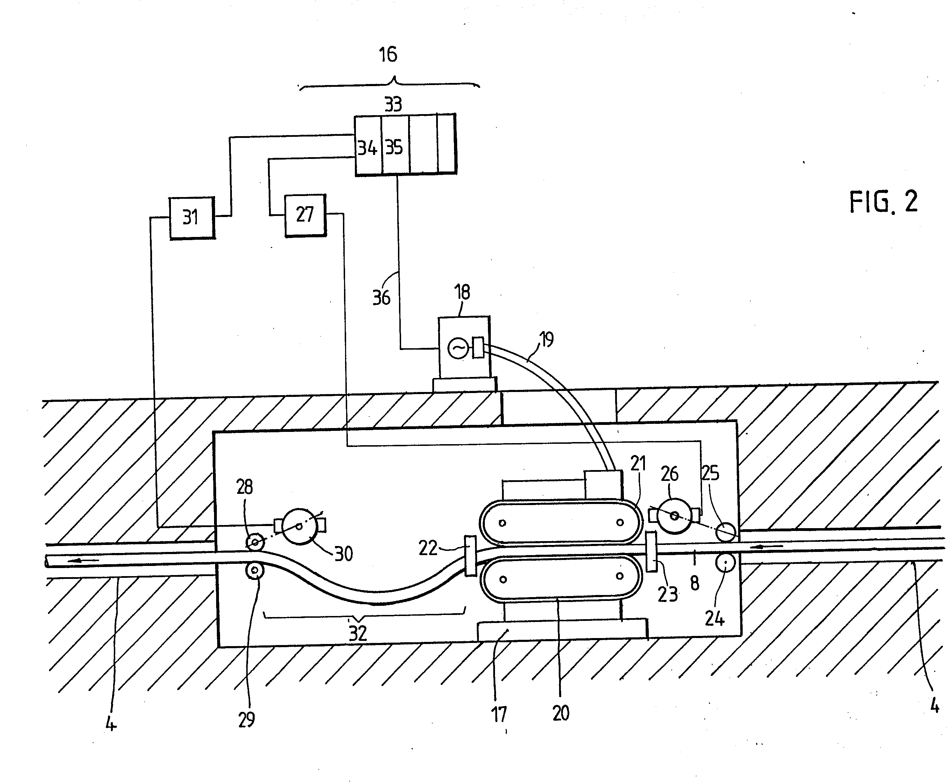

la fig. 2 une vue également schématique et en coupe de la première forme d'exécution du dispositif de commande d'un transporteur intermédiaire, et

la fig. 3 une vue analogue à la fig. 2, montrant la seconde forme d'exécution.

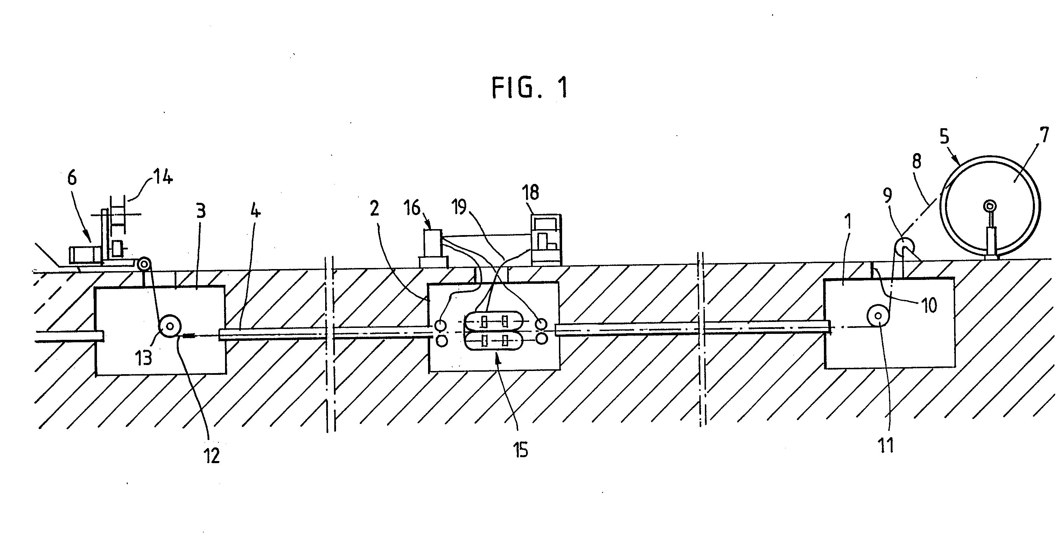

La fig. 1 montre de façon générale une installation de pose d'un câble de transmission par exemple d'un câble formée de fibres optiques. L'ensemble du chantier de pose du câble est divisé en un certain nombre de tronçons successifs séparés les uns des autres par des chambres. Ainsi, à la fig. 1 on voit trois chambres désignées par 1,2 et 3 qui seront désignées ci-après comme chambre amont pour la chambre 1, chambre intermédiaire pour la chambre 2 et chambre aval pour la chambre 3. Ces chambres sont enterrées dans le sol et elles sont reliées l'une à l'autre par des segments de tube 4. Bien entendu, comme on a représenté une séparation entre la chambre 1 et la chambre 2 d'une part et entre la chambre 2 et la chambre 3 d'autre part, plusieurs chambres intermédiaires telles que 2 peuvent être imaginées entre la chambre amont 1 et la chambre aval 3. Les tronçons délimités par les chambres peuvent avoir une longueur de 1000 m par exemple et une installation complète de pose adaptée à la pose d'un câble de 5 km de longueur d'un seul tenant comportera plusiers chambres intermédiaires. Si l'ensemble du tracé sur lequel le câble doit être posé a une longueur supérieure à 5 km, il faudra prévoir des raccordements entre les différents câbles.

L'installation décrite comporte à l'amont un dévidoir 5 et à l'aval un treuil tracteur 6. Le dévidoir 5 comporte une bobine débitrice 7 de grand diamètre sur laquelle est enroulé un câble 8 déstiné à être engagé dans les différents tronçons du tube 4. Une poulie de guidage 9 guide le câble depuis la bobine 7 à travers l'ouverture 10 de la chambre 1 vers l'intérieur de cette chambre où une seconde poulie de guidage 11 lui donne une direction et une position coaxiales au tube 4. Pour la compréhension du schéma on supposera que le câble 8 a déjà parcouru deux tronçonsde tube 4, est parvenu dans la chambre 2, a pénétré dans un troisième tronçon de tube 4 et que son extrémité aval est raccordée à un filin de traction situé à l'intérieur du troisième tronçon de tube 4. Le filin de traction a été engagé, au début de l'opération, dans les 5 tronçons du tube 4. Il ressort dans la chambre aval 3 où il est visible en 12, et passe sur une poulie de guidage 13 qui le dirige vers le treuil de traction 6. Ce treuil comporte lui-même de façon connue en soi différentes poulies qui guident le filin de traction 12 sur une bobine de réception 14. Comme le dévidoir 5, le treuil 6 est situé sur le sol et le filin de traction 12 passe par l'ouverture supérieure de la chambre 3.

Dans chacune des chambres intermédiaires telles que 2 est monté un transporteur intermédiaire 15. Chaque transporteur 15 porte sur un socle 17 des galets qui guident et entraînent par exemple des courroies 20 et 21 et qui sont mis en mouvement par un moteur hydraulique. Au transporteur 15 est associé un poste moteur 18 placé sur le sol et à partir duquel le moteur hydraulique est alimenté en énergie par des conduits 19. Le système de pompe incorporé au poste moteur 18 peut être entraîné par un moteur électrique et le poste moteur comporte une commande qui peut érgler le débit ou la pression du fluide moteur dans les tubes 19.

Le deux bandes transporteuses 20 et 21 qui constituent les organes d'entraînement du transporteur 15 agissent sur le câble 8 par adhérence et l'entraînent dans le sens axial. Pour diriger correctement des paires de galets de guidage 22 et 23 sont prévues aux extrémités amont et aval du transporteur. La vitesse linéaire avec laquelle le câble 8 est entraîné correspond à la vitesse des bandes 20 et 21 s'il n'y a pas de glissement.

Le dispositif de commande 16 du transporteur comprend dans la forme d'exécution décrite ici deux capteurs de longueur. L'un d'eux est situé à l'amont du transporteur. Il comporte une paire de galets 24 et 25 qui embrassent le câble 8 immédiatement à l'amont du transporteur. Ces galets sont disposés de façon à être entraînés en rotation par le câble, au contact de celui-ci, de sorte que leur vitesse de rotation reproduit fidèlement la vitesse linéaire du câble. Un des galets est accouplé à un détecteur de rotation 26, par exemple un détecteur d'un type capable de générer des impulsions qui sont transmises à un compteur 27.

Le second capteur de longueur est aussi constitué d'une paire de galets 28 et 29 analogues aux galets 24 et 25, dont l'un est accouplé à un détecteur de rotation 30 fonctionnant en détecteur du chemin parcouru par le câble, de la même manière que le détecteur 26. La sortie du détecteur 30 est reliée à un compteur 31.

Les paires de galets 24, 25 et 28, 29, de même que les détecteurs 26 et 30 seront portés par des supports (non représentés) qui peuvent être fixés, suivant les coditions locales, entre les parois de la chambre intermédiaire ou à l'entrée des tronçons de tube 4.

Alors que le capteur de longueur amont est placé immédiatement à l'amont du transporteur, on voit que le capteur aval (28, 29, 30) est placé tout près de l'entrée du tube 4, c.à.d. à une certaine distance du transporteur. De plus, le câble 8 est disposé de façon qu'entre le transporteur et le capteur aval (28,29,30) il parcourt une zone 32 de détection dans laquelle il ne subit aucun effort de traction. Le moyen le plus simple pour assurer cette absence de tension sur le câble consiste à disposer ce dernier suivant un chemin incurvé, dans la zone de détection. Aussi longtemps que le câble n'est pas tendu, il ne subit aucun effort et pour maintenir en permanence cet état d'absence de tension, il suffit d'ajuster le dispositif de commande de façon que toute longueur de câble qui sort de la zone de détection en traversant le capteur aval (28,29,30) soit remplacée par une longueur équivalente entrant dans le transporteur et mesurée par le capteur amont (24,25,26).

Cette fonction est assurée dans l'installation décrite par le dispositif de commande 16 dont une partie, placée sur le sol, comprend un circuit électronique 33 relié aux compteurs 31 et 27 et agencé de façon à élaborer des signaux de commande qui sont dirigés vers le poste moteur 18.

Le circuit 33 comprend un premier élément de circuit 34 dans lequel les comptages des deux compteurs 31 et 27 sont comparés et qui produit un signal donnant la différence des comptages des deux compteurs, donc la variation de la longueur de câble comprise dans la zone de détection. Si le résultat de la comparaison, c.à.d. la différence entre les deux comptages est nulle, cela signifie que le longueur de câble dans la zone de détection est restée inchangée, tandis que si la comparaison donne une valeur différente de zéro , cela signifie que la longueur de câble a varié dans un sens ou dans l'autre.

L'élément de circuit 35 élabore un signal de commande qui est transmis par la ligne 36 au poste moteur 18. . Ce signal entraîne une augmentation de la vitesse du transporteur 15 si la longueur du câble dans la zone de détection a diminué ou au contraire, un ralentissement du transporteur, si cette longueur a augmenté. On obtient ainsi un réglage stable, dans lequel le signal du circuit de comptage 31 joue le rôle de valeur de consigne et le transporteur est commandé de façon que la longueur de câble qui le parcourt soit égale à celle qui sort de la zone de détection. Le câble 8 est tiré à travers le segment de tube 4 situé à l'amont de la chambre 2 et si la chambre intermédiaire 2 précédente est également équipée d'un transporteur analogue au transporteur 15 et d'un dispositif de commande analogue au dispositif 16 décrit ci-dessus, alors l'effort de traction sur le segment de câble qui se trouve à l'amont de la chambre 2, est égal au maximum à la force de résistance due au frottement du tronçon de câble situé entre les deux chambres. La distance entre ces deux chambres sera déterminée de façon à ce que cet effort de frottement ne donne pas de sollicitation à la traction atteignant un seuil exagéré.

Avec le dispositif décrit, la différence entre les comptages ne peut pas être maintenue à zéro d'une façon permanente. Cependant, le fonctionnement des circuits 34 et 35 sera conçu de façon qu'aussi longtemps que le compteur 31 marquera un excédent sur le compteur 27, la vitesse du transporteur 15 aura tendance à augmenter, et cela jusqu'au moment où l'égalité des comptages sera rétablie et inversément. Ainsi, le fonctionnement du dispositif décrit présente l'avantage d'être autonome. Il ne nécessite aucun raccordement aux transporteurs intermédiaires des différentes chambres 2 ni au dévidoir 5, ni au treuil 6, ce qui simplifie grandement l'établissement du chantier. D'autre part, il fournit une commande progressive et souple évitant les à coups et les sollicitations exagérés. Les conditions de démarrage sont excellentes. La conception et la construction sont simples puisque les seuls organes mécaniques à prévoir sont les transporteur 15 et les paires de galets ainsi que les détecteurs qui forment les capteurs de longueur décrits. Enfin, il faut souligner l'avantage qui résulte du fait que le câble est virtuellement divisé en tronçons indépendants pendant toute l'opération de pose. Celle-ci se ramène donc à une opération traditionnelle dans laquelle des tronçons de longueur relativement courte sont posés séparément. Les efforts de traction sur le câble sont donc fortement réduits.

Le dispositif de commande peut aussi être utilisé lors de la mise en place du filin de traction 12. Ce dernier doit être mis en place dans le sens de l'aval vers l'amont, c.à.d. à partir du treuil 6 jusqu'au dévidoir 5 en traversant successivement tous les tronçons de tube 4. Sur la longueur de chaque tronçon, ce filin peut être propulsé soit par des moyens pneumatiques, soit par tout autre moyen. En effet, il s'agit d'un câble souple de faible diamètre très résistant et qui ne risque pas d'être détérioré facilement. Dans chaque chambre 2 le filin sera mis en place dans le transporteur prévu dans cette chambre et dans la zone de détection associée à ce transporteur. Lorsque le filin aura passé une des chambres 2, le transporteur de cette chambre et la zone de détection associée à cette chambre pourront être mis en service afin d'assurer le tirage du filin de traction. Le transporteur devra donc fonctionner dans le sens inverse du sens usuel et la zone auxiliaire associée au transporteur sera dès lors située à l'aval par rapport au sens d'établissement du filin de traction. Pour cela on peut soit prévoir une distance suffisante entre le transporteur 15 et la paire de galets 24, 25, lors de la mise en place de ces organes, soit si la place disponible n'est pas suffisante, placer le transporteur au voisinage de la paire de galets 28, 29 pour la pose du filin.

Bien qu'une forme d'exécution préférée ait été décrite ci-dessus, les moyens détecteurs peuvent aussi dans d'autres formes d'exécution être réalisés différemment. Tout d'abord, il sera avantageux, dans bien des cas de disposer la zone de détection selon un coude. Cette situation se rencontre facilement dans les cas où les chambres intermédiaires sont placées à un endroit où le tracé du câble subit un changement de direction. Dans ce cas, les galets aval guideront le câble dans une autre direction que les galets amont et la "zone de mou" sera formée par un arc de longueur variable que le câble suit entre le transporteur et les galets aval. D'autre part, alors que dans la forme d'exécution décrite, les moyens détecteurs présentent le grand avantage que le câble ne nécessite pas d'être disposé autour d'une poulie selon un arc atteignant une amplitude de l'ordre de 180° comme c'était le cas dans des dispositifs connus antérieurement, on pourrait tout-de-même, dans d'autres formes d'exécution, prévoir dans la zone de détection des organes détecteurs impliquant que le câble soit guidé selon un certain arc de cercle autour d'une poulie. On pourrait par exemple prévoir dans le fond de la zone de détection une dépression en forme de sac et placer sur le câble un équipage mobile qui serait supporté par le câble passant sur une poulie flottante. Ainsi, la portion de câble située dans la zone de détection aurait la forme d'un U dont la longueur pourrait être variable et qui ne serait mis en tension que par l'équipage mobile suspendu au câble. Dans ce cas, la détection pourrait consister à repérer la position de l'équipage mobile en hauteur dans le sac, le transporteur étant accéléré quand la position de l'équipage mobile a tendance à remonter, tandis qu'au contraire il serait ralenti quand cette position à tendance à descendre, ce qui correspondrait à une augmentation de la portion de câble occupant la zone de détection.

On pourrait encore concevoir d'autres moyens de détection basés sur le même principe et utilisant soit des galets ou des poulies de guidage donnant au tronçon de câble situé dans la zone de détection un chemin incurvé soit une seule poulie ou un tambour de grand diamètre autour de laquelle ou duquel le câble serait conduit. Le cas échéant, la détection d'un état de tension ou d'un état d'absence de tension pourrait être détectée par le glissement du câble sur une poulie ou entre deux galets alors que si la poulie sur laquelle le câble est conduit tourne avec ce dernier, cela implique un état de tension non nul.

Cependant, le dispositif représenté à lafig. 3 constitue aussi une forme d'exécution particulièrement simple. A cette figure on voit à nouveau une chambre 2 qui se trouve entre deux segments de tubes 4 et dans laquelle est installé un transporteur 15 qui n'est représenté schématiquement que par ses bandes transporteuses 20 et 21.

Les moyens de guidage et de détection comportent dans cette seconde forme d'exécution un curseur 37 constitué d'un étrier 38 sur lequel sont montés des galets 39 reposant sur le câble 8, à une certaine distance à l'aval du transporteur 15. Au dessin on a représenté trois galets de petit diamètre disposés selon une ligne incurvée, ce qui donne au câble une courbure de grand rayon. Sous l'effet du poids de ce curseur, le câble prend une allure légèrement incurvée vers le bas dans la zone de détection. Celle-ci peut être limitée vers l'aval soit par l'entrée du tube 4, soit éventuellement par un galet (non représenté). Un fil est attaché à l'extrémité inférieure de l'étrier 38 et est tiré vers le bas, avec une force aussi faible que possible par un enrouleur 41 placé dans un bloc de base fixe 42 amarré au sol de la chambre 2. Le cas échéant, le bloc 42 pourrait se trouver dans le fond d'une dépression qui pourrait être pratiquée dans cette chambre.

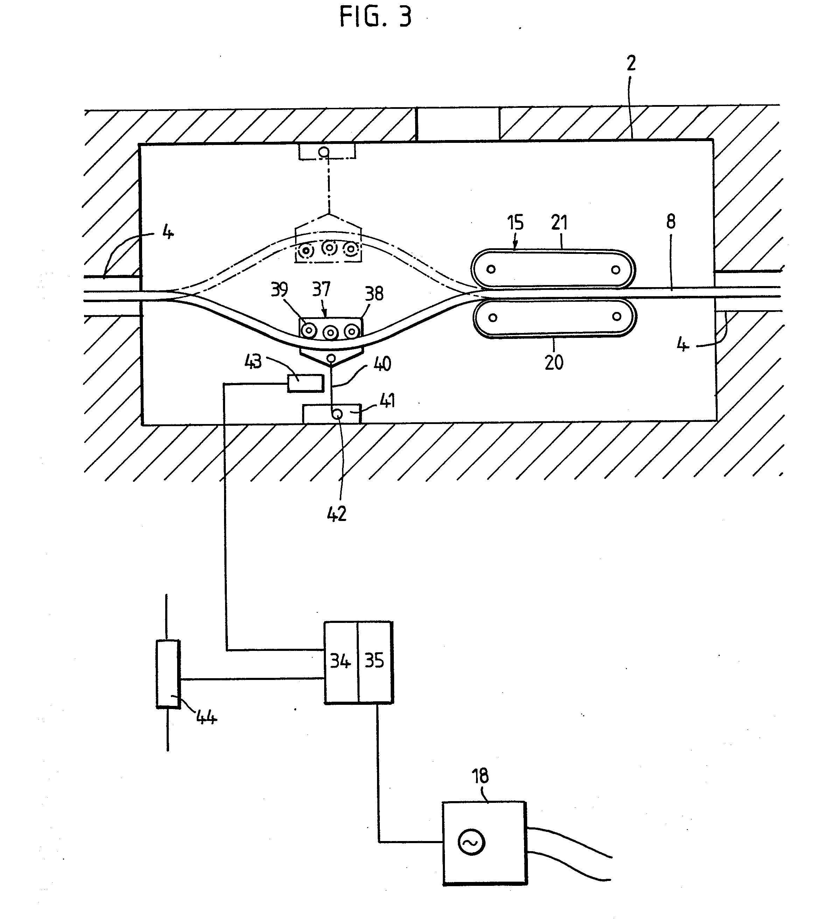

On notera d'ailleurs que le curseur 37 au lieu d'agir vers le bas pourrait tout aussi bien agir vers le haut comme on l'a représenté en pointillé à la fig. 3, ou latéralement. Une disposition latérale pourrait être particulièrement avantageuse dans le cas où la chambre 2 serait une chambre d'angle, c.à.d. dans le cas où la direction de sortie du tube 4 serait différente de la direction d'entrée.

Un capteur de position 43 est encore disposé en regard du fil 40, de manière à détecter tout déplacement longitudinal de ce fil et par conséquent toute modification de la longueur du segment de câble dans la zone de détection. Ces modifications de longueur seront additionnées dans le circuit 34, le total étant constamment comparé à une valeur de consigne donnée par un potentiomètre 44, de sorte que le circuit 35 peut commander le moteur d'entraînement du transporteur, comme dans la première forme d'exécution.

Finalement, en ce qui concerne la conception des circuits électroniques du dispositif de commande et la formation des signaux issus des détecteurs, l'homme de l'art saura réaliser les éléments nécessaires en utilisant des composants connus dans ce domaine de la technologie. En particulier, bien que l'on ait décrit les détecteurs 26 et 30 comme capables d'émettre des impulsions dont le nombre correspond à la longueur de câble ayant passée en contact avec les galets de guidage, il est évident que des détecteurs capables d'émettre des signaux analogiques sous forme par exemple d'une tension proportionnelle à la grandeur mesurée, peuvent également être utilisés. Dans ce cas, les circuits de traitement correspondants remplissant les mêmes fonctions que les compteurs 27 et 31 seraient des circuits de traitement de type analogique digital ou analogique sur lesquels il n'est pas nécessaire de donner des détails.

REVENDICATIONS

1.  Dispositif de commande d'un transporteur intermédiaire dans une installlation de pose d'un élément allongé tel qu'un câble de transmission, caractérisé en ce que le transporteur est d'un type à vitesse d'entraînement variable et en ce que le dispositif comporte des moyens de guidage du câble disposés à l'aval du transporteur dans un  emplacement adjacent à ce dernier, ces moyens délimitant une zone de détection que le câble  parcourt sous l'action de moyens de traction situés à l'aval de cette zone, des moyens de détection capables de produire une information relative à la longueur du segment de câble situé dans la zone de détection et des moyens de commande capables d'utiliser la dite information et de régler la dite vitesse d'entraînement du transporteur à une valeur telle que la longueur du dit segment est suffisante pour assurer un état de tension nulle.

2. Dispositif suivant la revendication 1, caractérisé en ce que les moyens de détection comportent des organes détecteurs placés en deux points de la zone de détection éloignés l'un de l'autre, en ce que les dits organes détecteurs sont agencés de façon à mesurer les longueurs de câble passant en chacun des deux points de détection et en ce que les moyens de commande sont agencés de façon à calculer la différence entre les dites longueurs de câble et à agir sur la vitesse d'entraînement de manière que cette différence reste constamment nulle en moyenne.

3.  Dispositif suivant la revendication 2, caractérisé en ce que la zone de détection est délimitée par les dits organes détecteurs, ceux-ci étant consitutés par des paires de galets maintenant le câble aux deux points de détection en position et en direction, un des galets de chaque paire étant relié à un compteur de rotation.

4.      Dispositif suivant la revendication 3, caractérisé en ce que la paire de galets qui constitue l'organe détecteur placé à l'amont de la zone de détection est incorporée au transporteur.

5.      Dispositif selon la revendication 3, caractérisé en ce que la paire de galets qui constitue l'organe détecteur placé à l'amont de la zone de détection est située à l'amont du transporteur.

6.      Dispositif selon la revendication 5, caractérisé en ce que les dites paires de galets sont supportées indépendamment du transporteur de sorte que ce dernier est susceptible d'être placé à un emplacement librement sélectionné, entre les dites paires de galets.

FIG. 1

FIG. 2

0152720

FIG. 3

Office européen
des brevets

**RAPPORT DE RECHERCHE EUROPEENNE**

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int. Cl. ³) |
|---|---|---|---|
| A | CONFERENCE EUROPEENNE SUR LES COMMUNICATIONS OPTIQUES, 21-24 septembre 1982, pages 517-522, Cannes, FR; T. SAKAI et al.: "Système de pose de câbles optiques avec machine de tirage intermédiaire" * page 519, colonne de gauche, alinéa 6 - colonne de droite, alinéas; figures 1,6 * | 1 | H 02 G    1/08 |
| A | FR-A-1 557 074  (DROUARD) * page 3, colonne de gauche; alinéa 4; figure 3 * | 1 | |
| A,D | DE-A-3 019 667  (SIEMENS) * page 10, ligne 16 - page 11, ligne 11; figure 3 * | 1 | |

DOMAINES TECHNIQUES RECHERCHES (Int. Cl. ³)

H 02 G    1/00
H 02 G    9/00

Le présent rapport de recherche a été établi pour toutes les revendications

| Lieu de la recherche | Date d'achèvement de la recherche | Examinateur |
|---|---|---|
| LA HAYE | 12-10-1984 | LOMMEL A. |